# EUROPÄISCHE PATENTANMELDUNG

(11) **EP 0 985 601 A2**
(43) Veröffentlichungstag der Anmeldung: **15.03.2000**
(21) Anmeldenummer: 99113791.0
(22) Anmeldetag: 14.07.1999
(51) Int. Cl.: B64D 17/02, B64C 3/48, B64D 25/08

(54) **Tragwerk für bemannte und unbemannte Fluggeräte**

(30) Priorität: 16.07.1998 DE 19832008
(71) Anmelder: Kalkbrenner, Wolfgang, 88662 Überlingen (DE)
(72) Erfinder: Kalkbrenner, Wolfgang, 88662 Überlingen (DE); Kalkbrenner, Andreas, 88662 Überlingen (DE)

(57) **Zusammenfassung**

Ein mit Stauluft gefüllter bzw. stabilisierter Gleitschirm eignet sich wegen niedriger Flächenbelastung, kleiner erforderlicher Antriebsleistung, geringem Stauvolumen und geringem Gewicht als Tragwerk für eine Reihe von Fluggeräten, z. B. für sportliche Zwecke. Nachteile bisheriger Gleitschirme sind aber die Labilität der Schirmkappe bei Flugmanövern und Böen sowie die schlechte Entfaltbarkeit, vor allem bei stärkerem Wind. Diese Nachteile werden durch die Erfindung beseitigt.

Durch ein aufblasbares Nasenprofil (**10**) wird sowohl eine gute Entfaltbarkeit des eng verpackten Gleitschirmes erreicht als auch die Schirmnase versteift. Eine Druckregelung ermöglicht die Anpassung des Nasenradius an die Fluggeschwindigkeit.

Als Rückschlagventile wirkende Klappen (**11**) vor den Stauluftöffnungen (**6**) verhindern die Entleerung der Schirmkammern bei örtlich geringen Staudrücken und bewirken über die gesamte Spannweite den höchsten Staudruck, während sonst die Tendenz zum geringsten Druck besteht.

Die dadurch erzielten Handhabungs- und Sicherheitsvorteile kommen nicht nur bei allen Fluggeräten mit Gleitschirmen zum Tragen. sondern ermöglichen auch erstmals die Anwendung von Gleitschirmen als Tragwerk für ein Pilotenbergegerät.

## Beschreibung

Die Erfindung bezieht sich auf einen durch Stauluft gefüllten und stabilisierten Gleitschirm als Tragwerk für alle Arten von Fluggeräten, bei denen Gleitschirme als Tragwerk verwendet werden.

Folgende Nachteile bisheriger Gleitschirme sind bekannt:
- schwieriges Entfalten des eng gepackten Schirmes und dabei Gefahr des Verhedderns der zahlreichen Leinen
- Gefahr der Entleerung einzelner Kammern (durch Rippen getrennte, vorne offene Segmente zwischen Ober- und Untersegel, die durch Stauluft gefüllt und stabilisiert werden) mit anschließendem Einfallen des betreffenden Schirmbereiches bei örtlich geringeren Geschwindigkeiten / Staudrücken durch Flugmanöver und / oder Böen.
- Neigung zum Einklappen des Nasenbereiches (FRONT STALL) im oberen und zum Strömungsabriß (FULL STALL) im unteren Geschwindigkeitsbereich
   -> Vor allem bei asymmetrischen Profilen mit großem Nasenradius und hoher Geschwindigkeit (kleiner Anstellwinkel) kann, z. B. durch Böen, an der Nasenunterseite Sog entstehen und die Nase nach unten verformen. Der dadurch verursachte örtlich negative Anstellwinkel verstärkt diesen Effekt - wenn keine Gegenmaßnahmen eingeleitet werden - bis zum Zusammenklappen des Schirmes.
   Kleine Nasenradien und symmetrische Profile wirken dem entgegen, verschärfen aber die Gefahr von Strömungsabrissen beim Langsamflug.
Im Gegensatz zu den diesbezüglich unproblematischen, aber auch zu wenig leistungsfähigen Anfängerschirmen ist deshalb bei Hochleistungsschirmen Schulung und Flugerfahrung notwendig. Trotzdem kommt es, vor allem in Extremsituationen, immer wieder zu gefährlichen Flugzuständen und Unfällen.

Aufgabe dieser Erfindung ist es, die genannten Nachteile zu beheben bzw. für den jeweiligen Einsatzzweck zumindest ausreichend zu entschärfen.
Dazu wird die Gleitschirmnase als aufblasbarer Schlauch ausgeführt, ähnlich wie in der Offenlegungsschrift DE 3903779 A1 beschrieben.
Im Gegensatz zu dieser Erfindung dient der aufblasbare Schlauch in der Nase hier aber nicht zur Profilformung (diese Aufgabe übernehmen weiterhin die bei Gleitschirmen üblichen Rippen), sondern der Druckschlauch dient als Entfaltungshilfe beim Start und wirkt im Flug als Nasenversteifung gegen das Einklappen.
Weiterhin ist das Nasenprofil über eine Druckregelung an die Fluggeschwindigkeit anpassbar, dient so zur Profiländerung (ovaler Querschnitt führt zu kleinem Nasenradius für den Schnellflug, kreisrunder Querschnitt bedingt großen Nasenradius für den Langsamflug), und wirkt damit über die Anpassung der Nasenform der STALL-Gefahr entgegen.

Als Rückschlagventile wirkende Klappen an den Stauluftöffnungen verhindern das Entleeren der Kammern und sorgen dafür, daß sich (über die Ausgleichsöffnungen der Rippen) im ganzen Schirm der örtlich höchste Druck einstellt, während ohne diese Klappen die Tendenz zum niedrigsten Druck besteht.
Die Klappen reduzieren zudem die offenen Stauluftflächen (Widerstandsverminderung) und lassen zusammen mit dem im Schnellflug flacheren Nasenprofil eine höhere Fluggeschwindigkeit zu.
Das Vermeiden der Kammerentleerung ist ebenfalls Gegenstand der US-Patente 5'201'482 und 5'573'207, deren Aufbau aber für eine enge Verpackung zu sperrig und für das automatische Entfalten zu kompliziert ist.

Die Handhabungs- und Leistungsverbesserungen sind für alle Gleitschirmanwendungen nutzbar, so entspricht beispielsweise ein damit ausgerüsteter Hochleistungsschirm in Bezug auf die Handhabungs- und Sicherheitsaspekte in etwa einem derzeitigen Allroundschirm.

Desweiteren ermöglicht ein erfindungsgemäß modifizierer Gleitschirm durch geringen Volumenbedarf bei geringer Leistungsanforderung ein Erweitern der bei Flugzeugen üblichen Schleudersitze zum Pilotenbergegerät.

Zur Rettung von Piloten, die ihr Flugzeug über Feindgebiet oder unzugänglichem bzw. zur Landung mit dem Fallschirm ungeeignetem Gelände mit dem Schleudersitz verlassen müssen, gibt es bereits Konzepte, den mit Antrieb und Tragwerk versehenen Schleudersitz als Pilotenbergegerät zu benutzen.

Bekannt sind Lösungsvorschläge auf Basis
- Hubschrauber (US-Patente 3.833.191 und 4.017.043)
- Kleinflugzeug mit Faltflächen (US-Patent 4.813.634)
- Tragschrauber (SAVER, Firma Kaman, s.a. INTERAVIA 4/72 Seite 305)
- Paragleiter mit Antrieb (AVIATION WEEK & SPACE TECHNOLOGY, February 17, 1969, Seite 39; INTERAVIA 5/69 Seite 622).

Dabei erfordern aber kleine Tragwerke große Antriebsleistungen, bzw. geringe Antriebsleistungen große Tragwerke, und es ist bisher nicht befriedigend gelungen, dieses Zusatzvolumen im Cockpitraum unterzubringen.

Mit modernen Hochleistungsgleitschirmen steht ein Tragwerk für niedrigste Flächenbelastung mit geringstem Gewicht, Leistungsbedarf und Stauvolumen zur Verfügung.

Der Verwendung als Tragwerk für ein solches Pilotenbergegerät standen aber bisher die anfangs genannten, gravierenden Nachteile entgegen.

Die erfindungsgemäße Erleichterung des 'Flighthandlings' durch die Versteifung der Schirmnase, die mögliche Variation des Nasenradius zur Anpassung an die Fluggeschwindigkeit, das Verhindern der Kammerentleerung und vor allem das sichere Entfalten des eng am Schleudersitz verpackten Gleitschirmes bedeuten ein wesentliches Mehr an Sicherheit für die als Gleitschirmflieger ungeübten Jetpiloten, vor allem in einer Streßsituation, wie nach dem Notausstieg aus dem Flugzeug.

Ein zeichnerisch dargestelltes Ausführungsbeispiel wird nachfolgend beschrieben:

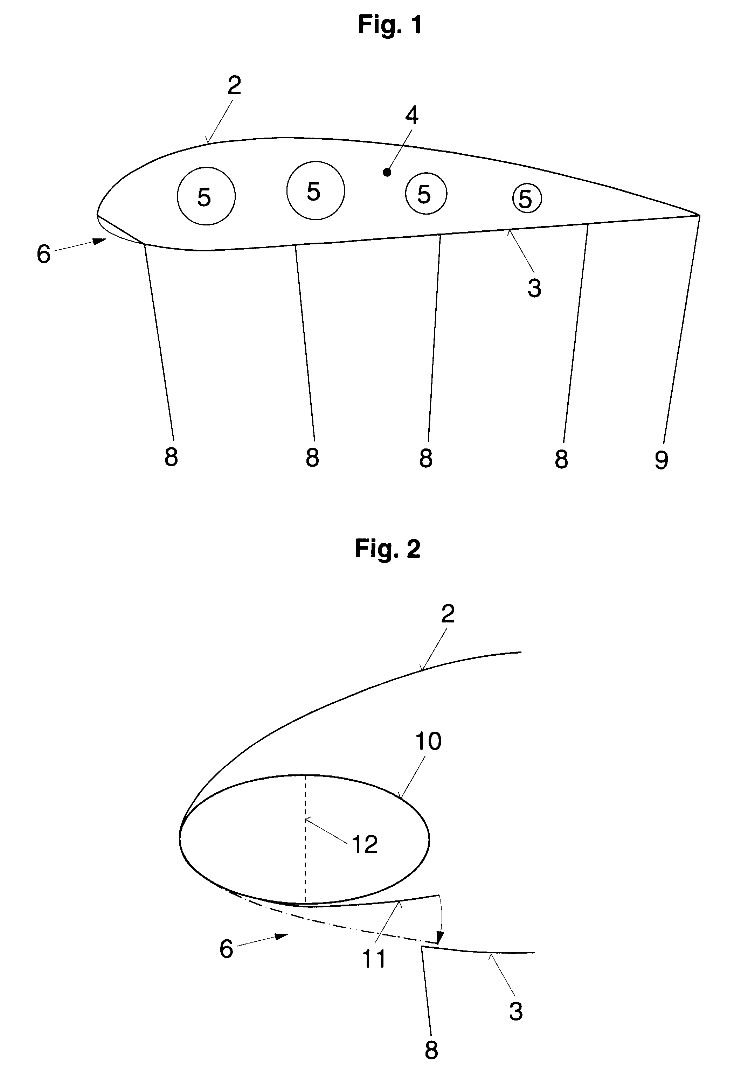

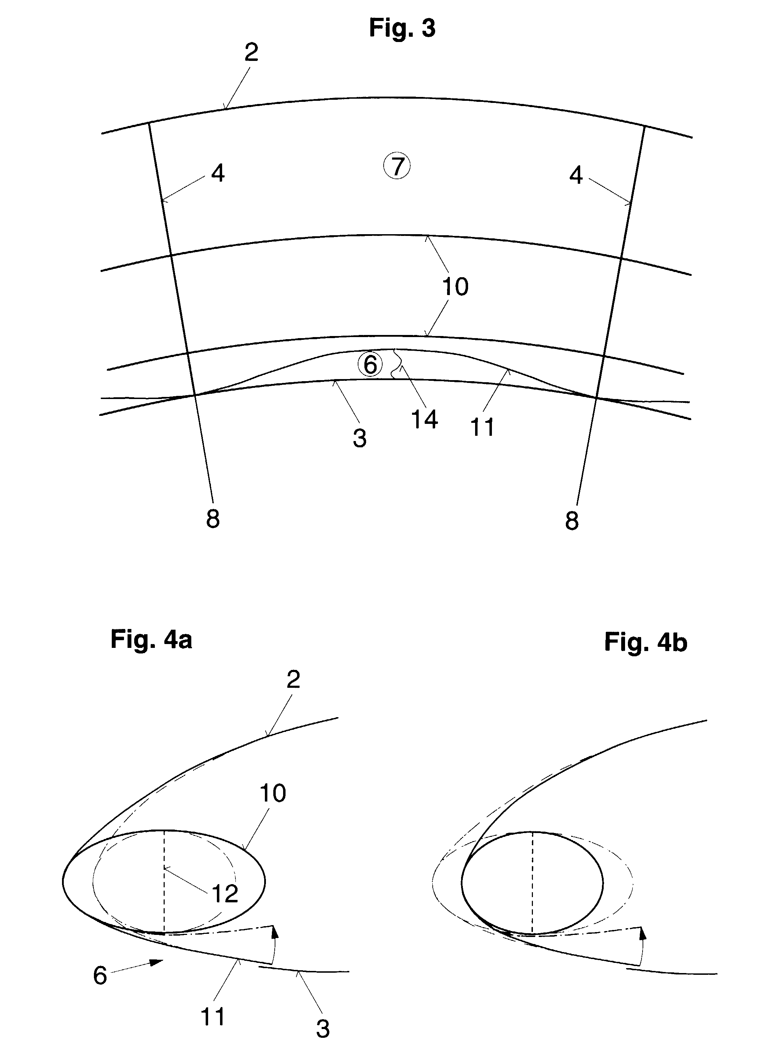

**Fig. 1** zeigt den Querschnitt durch einen Gleitschirm bisheriger Ausführung, bestehend aus Obersegel **2**, Untersegel **3** und den durch ihre Form das aerodynamische Profil bildenden Rippen **4** mit Ausgleichsöffnungen **5**. Jeweils zwei Rippen begrenzen zusammen mit Ober- und Untersegel eine über die Stauluftöffnung **6** gefüllte Kammer **7** (siehe **Fig. 3**). Das Profil des Schirmes wird von dem in den Kammern herrschenden Druck gebildet und aufrechterhalten. Die Verbindung zwischen Schirm und Last erfolgt durch die Fangleinen **8**, gesteuert wird der Schirm über die Steuerleinen **9**.
**Fig. 2** zeigt die erfindungsgemäße Anordnung des Druckschlauches **10** nach **Anspruch 1**, der das Nasenprofil des Gleitschirmes bildet, sowie der Stauluftklappen **11** nach **Anspruch 2,** die, wie in **Fig. 3** dargestellt, im Bereich der Rippen **4** mit dem Untersegel **3** fest verbunden sind und - nach **Anspruch 10** durch Fangleinen **14** - bei hohem Kammerdruck gegen Öffnen nach außen gesichert sind.
**Fig. 4** zeigt den Schlauch **10** mit dem Steg **12** in der Ausführung nach **Anspruch 5** und **6** in den Betriebszuständen Schnellflug mit Maximaldruck (**Fig. 4a**) und Langsamflug mit Minimaldruck (**Fig. 4b**). Der Steg **12** muß so ausgeführt sein, daß beidseits der gleiche Druck herrscht (Ausgleichsöffnungen oder gasdurchlässiges, z. B. grobmaschiges Gewebe).

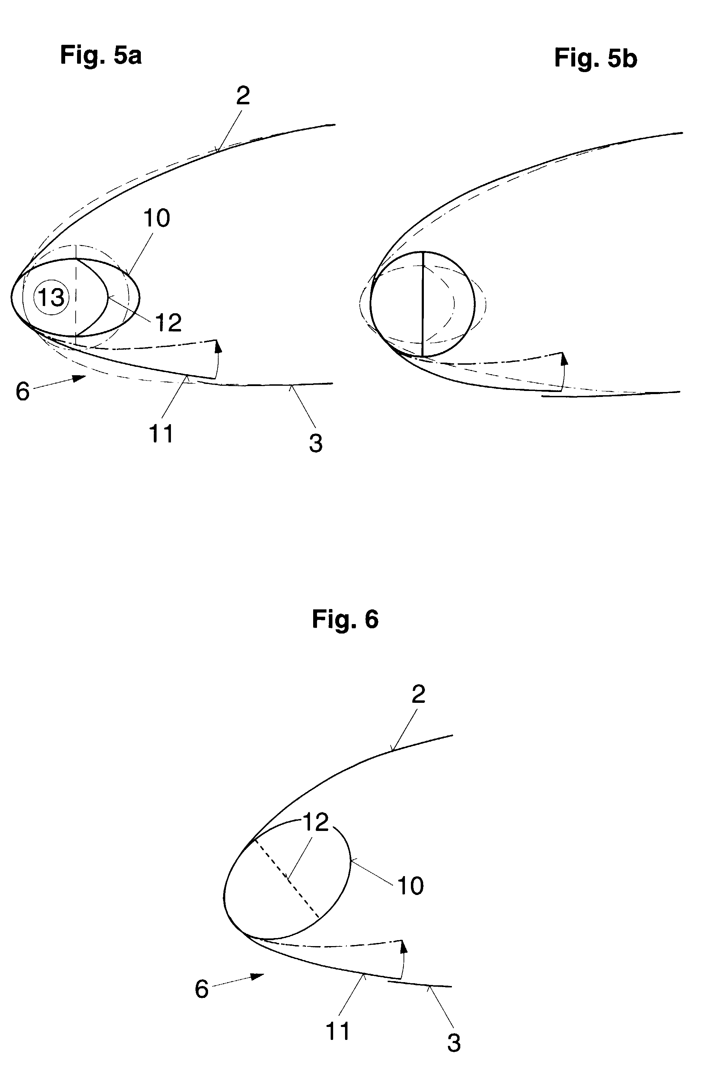

**Fig. 5a** zeigt Schlauch **10** mit dem gasundurchlässigen Steg **12** in der Zweikammer-Ausführung nach **Anspruch 7**, bei der die Profilanpassung für den Schnellflug durch höheren Druck in der vorderen Kammer **13** bewirkt wird. Die Langsamflugkonfiguration (großer Nasenradius, **Fig. 5b**) wird bei dieser Ausführung durch Druckausgleich erreicht.
Bei **Fig. 4** und **5** sind jeweils die entgegengesetzten Konfigurationen strichpunktiert dargestellt.
**Fig. 6** zeigt den Schlauch **10** nach **Anspruch 8** für ein stark asymmetrisches Profil schräg angeordnet.

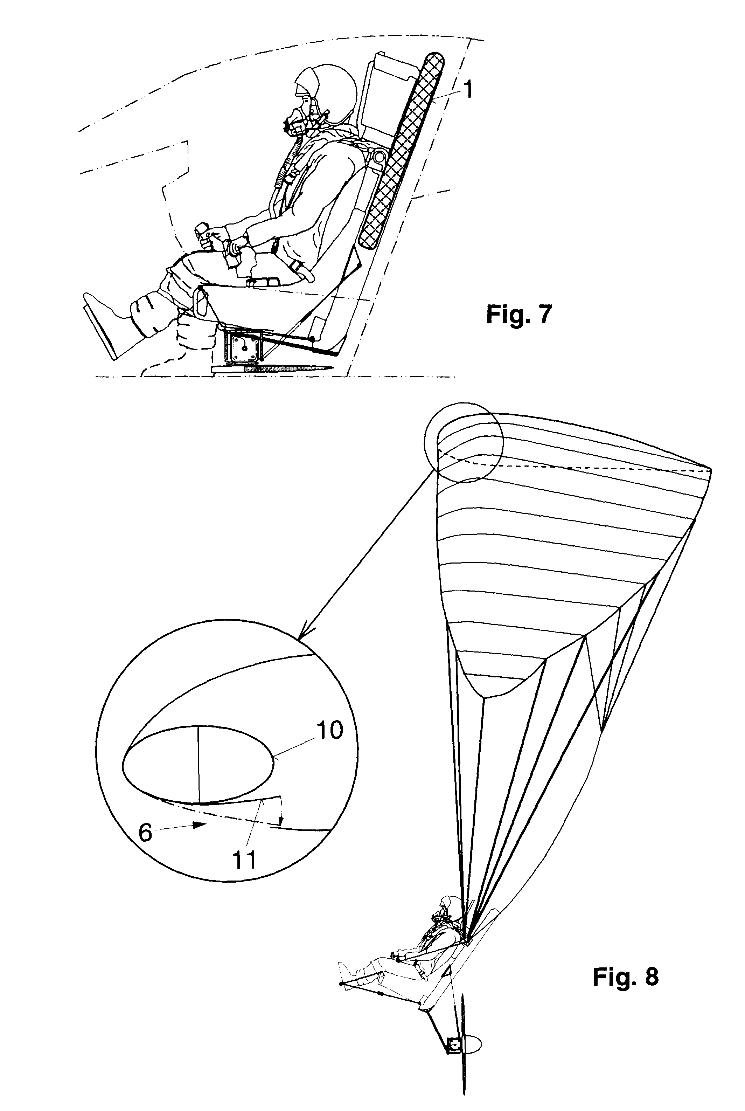

**Fig. 7** zeigt das Pilotenbergegerät nach **Anspruch 3** im Flugzeug und
**Fig. 8** zeigt den Flugzustand.

Im dargestellten Beispiel ist die Antriebseinheit (Motor, Getriebe und Propeller mit aufblasbarer Nabenverkleidung) unter dem Sitz angeordnet und wird für den Flugzustand nach hinten geschwenkt. Der komplette Gleitschirm **1** ist, in einer Hülle verpackt, hinter der Rückenlehne des Sitzes verstaut.

## Patentansprüche

1. Gleitschirm als Tragwerk für bemannte und unbemannte Fluggeräte, dadurch gekennzeichnet, daß die Schirmnase durch einen aufblasbaren, gasundurchlässigen Schlauch gebildet wird.

2. Gleitschirm als Tragwerk für bemannte und unbemannte Fluggeräte, dadurch gekennzeichnet, daß die bei Gleitschirmen üblichen, im Kinnbereich angeordneten Stauluftöffnungen mit profilkonformen, beweglichen Klappen, die als Rückschlagventile wirken, versehen sind.

3. Ein Pilotenbergegerät,
dadurch gekennzeichnet, daß ein Gleitschirm als Tragwerk für einen Schleudersitz mit Antrieb, insbesondere Propellerantrieb, verwendet wird.

4. Gleitschirm nach Anspruch **1** und **3**,
dadurch gekennzeichnet, daß sich der verpackte Schirm durch Füllen des Schlauches mit Druckgas zum Flugzustand entfaltet, der Druck im Schlauch von einem Gasgenerator oder Druckbehälter gespeist und aufrechterhalten wird, und/oder überschüssiges bzw. weiteres Druckgas teilweise oder gänzlich zur Erstfüllung der Schirmkammern herangezogen werden kann.

5. Gleitschirm nach Anspruch **1** und **3**,
dadurch gekennzeichnet, daß der Schlauch durch einen in der Mitte angeordneten gasdurchlässigen Steg und/oder durch Gewebe mit - im Querschnitt tangential - unterschiedlicher Steifigkeit eine aerodynamisch günstige elliptische Form erhält.

6. Gleitschirm nach Anspruch **1, 3,** und **5**,
dadurch gekennzeichnet, daß sich bei einem Schlauch aus dehnbarem Gewebe durch Variation des Gasdrucks der Nasenradius des Schirmprofils entsprechend der Fluggeschwindigkeit wählen läßt (hoher Druck: kleiner Radius, geringerer Druck: größerer Radius bis kreisrund).

7. Gleitschirm nach Anspruch **1** und **3**,
dadurch gekennzeichnet, daß der Schlauch aus nicht dehnbarem Gewebe durch einen gasundurchlässigen, mittigen Steg in zwei Kammern unterteilt ist (Alternative zu Anspruch 6), wobei höherer Druck in der vorderen Kammer kleineren Nasenradius für Schnellflug, und Druckausgleich, z. B. über ein Ventil, den größtmöglichen Radius für den Langsamflug, z. B. den Landeanflug, bewirkt.

8. Gleitschirm nach Anspruch **1, 3, 5, 6**, und **7**,
dadurch gekennzeichnet, daß der den Schlauch teilende Steg bei symmetrischem Profil senkrecht zur Profilsehne angeordnet bzw. bei asymmetrischem Profil so weit schräg gestellt wird, daß Schlauchwandung und Profilwölbung weitmöglichst übereinstimmen.

9. Gleitschirm nach Anspruch **1, 3, 5, 6, 7**, und **8**,
dadurch gekennzeichnet, daß das Obersegel im Nasenbereich in Profilrichtung eine gewisse Dehnbarkeit erhält, um die bei den Druckänderungen entstehenden Längenänderungen möglichst faltenfrei zu kompensieren.

10. Gleitschirm nach Anspruch **2**,
dadurch gekennzeichnet, daß die Klappen gegen Öffnen nach vorn (z. B. bei hohem Kammerdruck) durch Fangleinen oder ein weitmaschiges Gewebe oder sonstige Verriegelungselemente gesichert sind.
